# EUROPEAN PATENT APPLICATION

(11) **EP 4 160 034 A1**
(43) Date of publication of application: **05.04.2023**
(21) Application number: 21275140.8
(22) Date of filing: 04.10.2021
(51) Int. Cl.: F16C 35/04, F16C 37/00, F16C 35/077

(54) **BEARING HOUSING**

(71) Applicant: Hamilton Sundstrand Corporation, Charlotte, NC 28217 (US)
(72) Inventor: EASLEY, Christian, Henley-in-Arden, B95 5LN (GB); PAGE, Andrew E, Tring, HP23 4QD (GB); POCOCK, Edward G C, Milton Keynes, MK19 6JR (GB)
(74) Representative: Dehns

(57) **Abstract**

A housing (2) for a bearing (38) is provided, the housing (2) comprising: a radially inner annular surface (54A) extending around a central axis (X-X) and adapted to receive a radially outer surface of a bearing (38); a cooling passage (34) extending through the housing (2) and around the radially inner annular surface (54A); an inlet (62A) for fluid to flow into the cooling passage (34); and an outlet (62B) for fluid to flow out of the cooling passage (34), wherein the cooling passage (34) comprises a profiled surface.

## Description

### TECHNICAL FIELD

The following description relates to cooling bearings such as bearings in an electrical machine.

### BACKGROUND

Rolling bearings (otherwise known as rolling element bearings or roller bearings) are bearings which carry a load by placing rolling elements between two bearing rings called races. The rolling elements can be balls, cylindrical rollers, spherical rollers, tapered rollers, or needle rollers. Such rolling bearings (hereinafter referred to as bearings) are used in many different applications such as for example, on drive shafts in various machines. For example, bearings are commonly used in electrical machines to support components that rotate relative to one another.

When subjected to heavy loading, bearings tend to heat up, potentially overheating. Such overheating can cause damage both to the bearings themselves and to surrounding structure and/or components. In one example, a bearing provided at the drive end of a direct drive electrical machine is subjected to high axial and radial loads resulting in high heat being generated.

The present disclosure seeks to provide an improved means for cooling such bearings.

### SUMMARY OF THE INVENTION

According to a first aspect of the disclosure, there is provided a housing for a bearing, the housing comprising:
a radially inner annular surface extending around a central axis and adapted to receive a radially outer surface of a bearing;
a cooling passage extending through the housing and around the radially inner annular surface;
an inlet for fluid to flow into the cooling passage; and
an outlet for fluid to flow out of the cooling passage,
wherein the cooling passage comprises a profiled surface.

A housing for a bearing as disclosed herein may prevent a bearing from overheating in use, thus allowing the bearing to operate with increased efficiency. This may in turn reduce power losses in a machine in which the bearing may be used.

The profiled surface of the cooling passage may increase heat flow away from the bearing in use by increasing the area of surface contact between the profiled surface, which may transmit the heat from the bearing, and fluid flowing through the cooling passage. Reducing power losses is important for example for drive-end bearings as they are often subjected to high axial and radial forces that can result in energy losses within the bearing. The energy losses, such as heat, sound, and vibrational losses, are usually those associated with frictional contact between the components of the bearing. By providing cooling for the bearing, the housing may act to reduce the effects of overheating of the bearing such as, for example, degradation of the bearing.

The housing can be adapted to receive any size or shape bearing.

The housing may be in direct contact with the bearing such that heat may be transferred efficiently (for example by conduction) from the bearing to the housing, thus providing efficient heat transfer to cool the bearing.

The profiled surface may be configured so as to not impede or block the flow of cooling fluid through the cooling passage. In any example of the disclosure, the profiled surface may comprise one or more protrusions that extend into the cooling passage. The one or more protrusions may extend radially into the cooling passage.

The one or more protrusions may be designed to form troughs or channels to aid the efficient flow of fluid through the cooling passage while increasing the area of surface contact between the profiled surface and the cooling fluid for increased heat transfer. In some examples of the disclosure, the one or more protrusions may form a plurality of axially spaced channels in the cooling passage.

The troughs or channels can be formed in a way that reduces areas of turbulence in fluid flowing through the cooling passage. By reducing the number of locations at which fluid is forced to alter course, the flow of fluid through the cooling passage can be improved. Thus, the wear on the housing can be reduced, and the amount and rate of heat transfer from the bearing to the cooling fluid can be improved. In some examples of the disclosure therefore, the plurality of axially spaced channels may extend parallel to one another.

In some examples of the disclosure, the plurality of axially spaced channels may extend perpendicular, or within 10° of perpendicular, to the central axis. This arrangement may be cost effective and relatively simple to manufacture.

In some examples of the disclosure, the one or more protrusions may extend into the cooling passage from a radially inner surface of the cooling passage.

In some examples of the disclosure, the cooling passage may be configured to extend along an axial extent of one or more bearings received in the housing.

A benefit of the housing, at least in some examples of the disclosure, is that it may be assembled in a variety of ways. The housing can be an integral, one piece component in some examples. In other examples, the housing may be a component made of two or more separable parts. The construction of the housing can therefore be varied to simplify manufacture or improve the ease of maintenance of the housing. In some examples of the disclosure, the housing may therefore comprise: a bearing liner comprising the radially inner annular surface adapted to receive a radially outer surface of a bearing; and a liner housing extending around and radially outward of the bearing liner, wherein the cooling passage is formed between the bearing liner and the liner housing.

When used in an electrical machine for example, it will be understood that any leakage of cooling fluid from the housing cooling passage into the electrical machine could be highly detrimental. For example, any water based fluid leakage could cause the electrical machine to fail. Various means of sealing the cooling passage could be envisaged to avoid such leakage. In some examples of the disclosure, the housing may comprise a first seal provided at a first axial end of the cooling passage and a second seal provided at a second axial end of the cooling passage. In some examples, the first and/or second seal may be annular.

It will be understood that cooling fluid may be introduced into the cooling passage in any desired way such as from an axial end of the housing. In some examples of the disclosure however, the inlet may extend from a radially outer surface of the housing into the cooling passage.

In a similar manner, cooling fluid may be removed from the cooling passage in any desired way such as from an axial end of the housing. In some examples of the disclosure however, the outlet may extend from the cooling passage to the radially outer surface of the housing.

The inlet and the outlet may be positioned at any location around the housing. There may be multiple inlets and outlets. The inlets and outlets can be positioned to promote even cooling of the bearing by providing travel paths for the fluid between respective inlets and outlets that are of equal distances. Therefore, in some examples of the disclosure, the inlet may be located radially opposite the outlet.

Still further, the inlet may be located near or at an uppermost point of the cooling passage and the outlet may be located near or at a lowermost point of the cooling passage. In this example, cooling fluid may flow around the cooling passage from the inlet to the outlet under the effect of gravity.

From a further aspect of the disclosure, a bearing assembly may be provided, the bearing assembly comprising a housing as described in any of the examples of the disclosure and one or more bearings mounted for rotation within the housing.

It will be understood that any suitable number and type of bearings for a particular use could be provided in the housing. In one example of the disclosure, three axially stacked bearings could be provided in the housing. If desired, the dimensions of the cooling passage and or of the profiled surface could vary across the extent of the housing to allow for different heat being produced by different bearings within the assembly or for other variations in the heat produced at different locations within the assembly.

It will be understood that the housing according to the disclosure could be used with many different types of bearings. Where grease packed bearings are used however, there will only be a very limited cooling effect provided by the grease as compared for example to oil cooled bearings. In some examples of the disclosure therefore, the one or more bearings may be grease packed bearings.

As discussed previously, the housing according to examples of the disclosure may be used in a variety of applications where it is advantageous to cool a bearing. The housing may however advantageously be used in an electrical machine. From a further aspect therefore, the present disclosure provides an electrical machine comprising a drive shaft, a rotor, a stator, and the bearing assembly as described in any of the examples of the disclosure.

In some examples, the electrical machine may be a direct drive electrical motor.

In some examples, the bearing assembly may be mounted between the drive shaft and the rotor.

It will be understood that in various examples of the disclosure, the coolant for the bearing can be isolated from other components, such as for example, other components in an electrical machine. The coolant may therefore be in an electricity free environment. This is beneficial as the coolant can be selected solely based on its ability to cool the bearing. Therefore the coolant can be an electrically conductive coolant if desired and may for example comprise a water-based coolant.

### BRIEF DESCRIPTION OF THE DRAWINGS

Certain examples of the disclosure will now be described by way of example only and with reference to the accompanying drawings in which:
Figure 1 is a schematic axial cross sectional view of an electrical machine according to the disclosure;
Figure 2 is a schematic radial cross sectional view of the electrical machine of Figure 1 taken along the line R-R;
Figure 3 is a schematic radial cross sectional view of a bearing housing; and
Figure 4 is a schematic perspective view of a part of the bearing housing of Figure 3.

### DETAILED DESCRIPTION

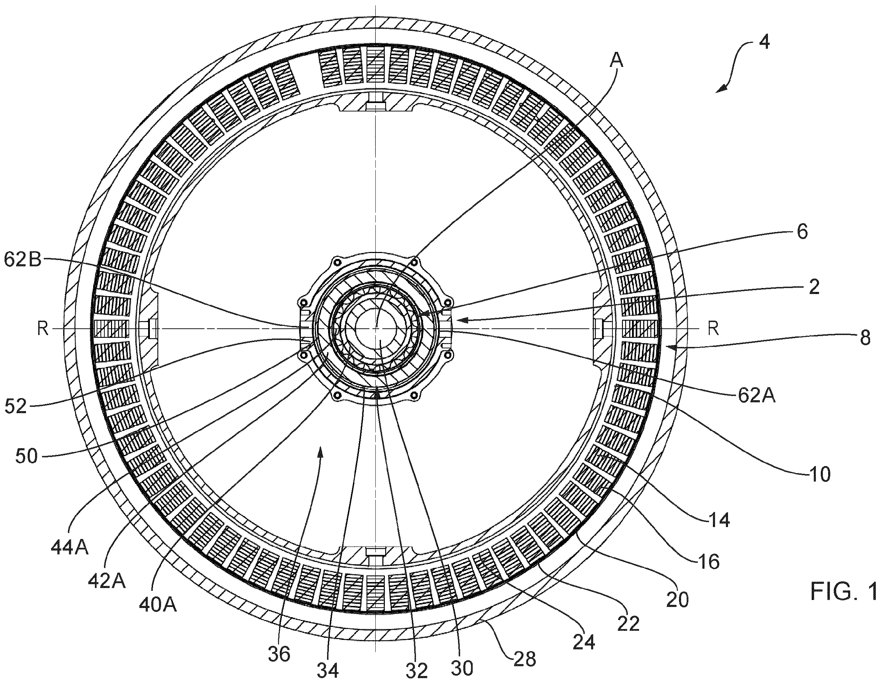

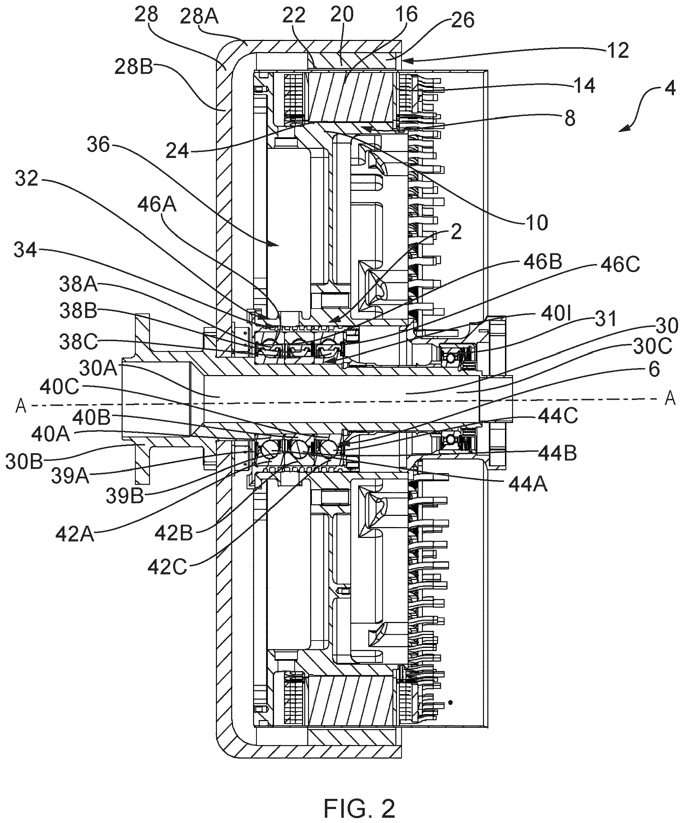

With reference to the Figures, a housing 2 for one or more bearings is described below. The housing 2 is shown in situ in an electrical machine 4 in the example of Figures 1 and 2. In this example, the housing 2 forms a cooling jacket for one or more bearings in a bearing assembly 6 in an electrical machine. The electrical machine may for example be for use in the aerospace industry. An example of use of such an electrical machine in the aerospace industry would include using an electric motor to drive a propeller for an aircraft. However, it will be understood that the housing and bearing assembly described herein could be used in other applications beyond electrical machines where cooling of one or more bearings is required. In one alternative example, the housing and bearing assembly could be used in a traction machine.

Figures 1 and 2 show an electrical machine 4. In this example, the electrical machine 4 is an electric motor. However, the principles of the disclosure may be applied to other electrical machines, for example generators.

In the electric motor of the example of Figures 1 and 2, a stator 8 comprises an annular core 10 which extends around an axis A. The annular core 10 extends parallel to the axis A to form a cylindrical body. In some examples, the core 10 may not be cylindrical, but instead may be a different shape, for example having a square or rectangular cross section. In the example of Figures 1 and 2, a radially outer rotor 12 extends around the outer circumference of the stator 8. In alternative examples of the disclosure, which are not shown here, the stator may instead be positioned radially outward of the rotor.

The core 10 comprises a plurality of slots 14 which receive windings 16.

The rotor 12 comprises a rotor body 26. The rotor body 26 extends annularly around the outer circumference of the stator 8, the rotor body 26 also extending parallel to axis A.

In the example shown, the rotor 12 and the stator 8 of the electrical machine 4 are housed within an outer casing 28 and extend around a drive shaft 30. The drive shaft 30 is configured to be driven to rotate about the axis A by rotation of the rotor 12, which is coupled to the drive shaft 30. Rotation of the drive shaft 30 may be used to perform mechanical work external to the electrical machine.

The outer casing 28 has a radially outer casing portion 28A which extends parallel to the axis A and radially outward of the rotor 12. The outer casing 28 further comprises a drive end shield 28B which extends radially inwardly from and perpendicular to the radially outer casing portion 28A. A drive end 30A of the drive shaft 30 extends through the drive end shield 28B so as to protrude from the outer casing 28. The drive end 30A of the drive shaft 30 has an attachment portion 30B. The attachment portion 30B may be attached to a mechanical device so as, for example, to drive rotation thereof. In one example, the mechanical device may be a propeller such as a propeller of an aircraft. The electrical machine may be a direct drive electrical motor for driving the propeller.

A bearing assembly 6 is arranged towards the drive end 30A of the drive shaft 30. As will be described in further details below, the bearing assembly 6 may comprise any suitable number and type of bearings such as, for example, one or more spherical rolling bearings. In other examples, the bearing assembly may include one or more bearings of any suitable type, including but not limited to ball bearings, tapered rolling bearings, or cylindrical bearings. The bearing assembly 6 extends around the drive shaft 30 to mount the rotor 12 to the drive shaft 30. In the example shown, the bearing assembly 6 is located within the outer casing 28. An additional bearing 31 (which is not described further here) may be provided at a non-drive end 30C of the drive shaft 30. In other examples, any number of additional bearings may be provided and located as required.

In an example such as that of a direct drive electrical motor for driving a propeller, the bearing assembly 6 located at the drive end 30A of the electrical machine may be subjected to high axial and radial forces. The bearing assembly 6 may therefore be required to have high axial and radial strength. Such bearing assemblies may in turn have high power losses resulting in elevated bearing temperatures in the bearing assembly during use, especially after prolonged use or when the electrical machine has been driving the drive shaft and the propeller for some time. Elevated bearing temperatures can cause damage to the bearings of the bearing assembly resulting in a reduced life cycle of the bearing assembly. The elevated temperatures can also potentially have a negative impact on surrounding metallic components of the electrical machine, for example, reducing the strength of surrounding metallic components, thus again reducing the effective life of an electrical machine. To mitigate against these effects, a cooling system 32 may be provided for cooling the bearings of the bearing assembly 6.

In some examples, an electrical machine such as the electrical machine of Figure 1 may comprise a single cooling system for cooling other components of the electrical machine 4 and the bearing assembly 6. In the example shown however, the cooling system 32 is for cooling the bearing assembly 6 only. Cooling the bearing assembly 6 independently of other components of the electrical machine 4 may be advantageous in some examples as electrically conductive cooling fluids (such as water based fluids) can be used in the electricity free environment of the bearing assembly. In contrast, the use of electrically conductive cooling fluids to cool components such as a stator or rotor would require careful isolation of the fluids. It is also possible to make maintenance of the bearing assembly and the bearing assembly cooling system more straightforward and less labour intensive if the bearing cooling system is isolated from the cooling of other components.

In the examples shown, the bearing assembly 6 comprises a housing 2 within which one or more bearings are held. The housing 2 when in situ in the electrical machine, extends parallel to the axis A. In the example shown, the housing 2 is annular and extends at least along the axial length of the bearing assembly 6. An annular cooling passage 34 extends through the housing 2 so as to surround one or more of the bearings in the bearing assembly 6. In the example shown, the cooling passage 34 extends along at least part of the axial extent of the bearing assembly 6.

A bearing support structure 36 extends radially from the housing 2 and couples the housing 2 to the stator 8.

The bearing assembly 6 of Figures 1 and 2 will now be described in further detail. Although any number of bearings could be used as required, the bearing assembly 6 shown in Figure 2 comprises three bearings 38A-38C forming a triplex bearing arrangement in which the three bearings 38A-38C are arranged axially adjacent to each other. Although oiled bearings could be used, in the example shown, the bearings 38A-38C are grease packed bearings. The bearings 38A-38C extend around the axis of rotation A. The bearings 38A-38C are arranged to surround the drive shaft 30. The bearings each have a proximal end surface 39A, proximate the drive end 30A of the drive shaft 30, and a distal end surface 39B, opposite the proximal end surface 39A. The term 'proximal' is used herein to refer to the end nearer the drive end 30A of the drive shaft 30. The term 'distal' is used herein to refer to the end nearer the non-drive end of the drive shaft 30. Use of the terms 'distal' and 'proximal' may refer to relative positions of two of more components between the two ends. The bearings 38A-38C are arranged axially. The bearings are arranged so that the distal end surface of the first bearing 38A is proximate the proximal end surface of the second bearing 38B. The bearings shown are axially arranged, but in other examples the bearings may be arranged differently e.g. radially stacked bearings.

Each bearing 38A-38C in the example shown comprises a spherical ball bearing having an inner race 40A-40C and an outer race 42A-42C. The inner race 40A-40C is an inner annular ring. The radially inner surface 401 of each inner race 40A-40C is coupled to the drive shaft 30 such that the inner race rotates with the drive shaft 30. The outer race 42A-42C is a radially outer annular ring. The outer annular race 42A-42C remains stationary, i.e. it does not rotate with the drive shaft 30. A plurality of rotatable objects such as ball bearings 44A-44C are provided between the inner and outer races of each bearing. The ball bearings 44A-44C contact the inner and outer race. The ball bearings 44A-44C rotate to allow the inner annular ring to move relative to the outer annular ring. The ball bearings 44A-44C in each bearing 38A-38C are held in position within the inner and outer races by a respective cage 46A-46C.

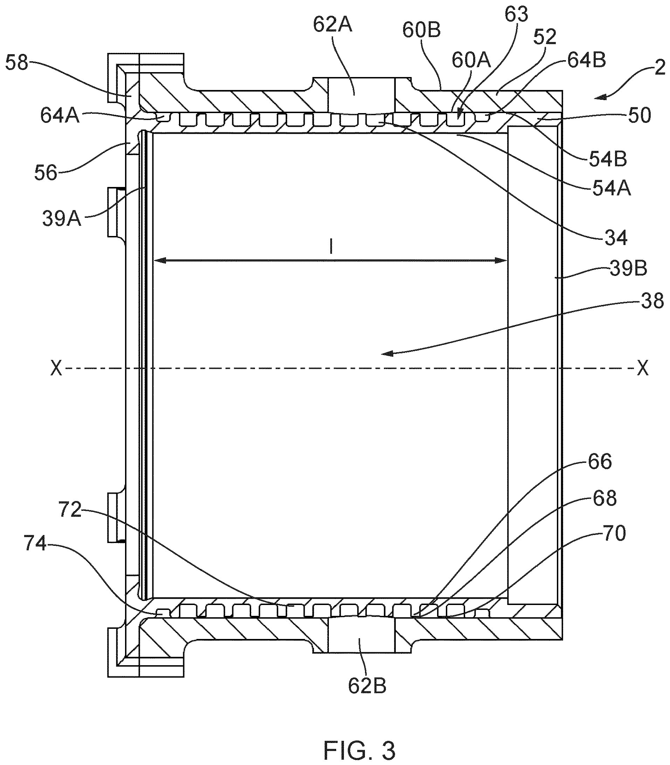

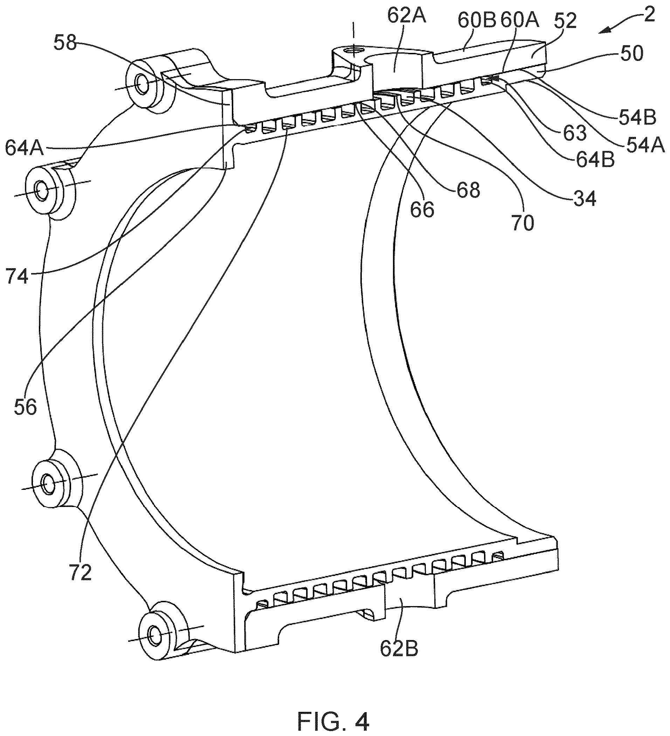

With reference to Figures 3 and 4, an example of the housing 2 will now be described in further detail. Figure 3 shows a radial cross sectional view of the housing 2. Figure 4 shows a perspective view of a part of the housing 2 shown in Figure 3. The housing 2 as shown is adapted to extend around the perimeter of the one or more bearings of the bearing assembly 6. In the example shown, the housing 2 is adapted to hold a single bearing 38. The housing 2 extends at least along the axial length I of the bearing 38. The housing 2 could be formed as a single component. In the example shown however, the housing 2 comprises a bearing liner 50 and a liner housing 52. The bearing liner 50 is generally annular and extends around and generally parallel to a longitudinal axis X-X which may be coaxial with the axis A when the bearing assembly 6 is in situ in an electrical machine. The liner housing 52 is also generally annular and extends generally parallel to the longitudinal axis X-X. The bearing liner 50 is received radially inwards of the liner housing 52 such that the liner housing 52 surrounds the bearing liner 50. The bearing liner 50 and the liner housing 52 are thus axially aligned.

A cooling passage 34 extends through the housing between the bearing liner 50 and the liner housing 52. The cooling passage 34 extends generally annularly such that the cooling passage 34 surrounds the bearing 38.

The bearing liner 50 comprises a radially inner surface 54A and a radially outer surface 54B. The bearing liner 50 receives the bearing 38 therein such that the radially inner surface 54A of the bearing liner 50 receives the radially outer race (not shown) of the bearing 38. A flange 56 is disposed at the proximal end of the bearing liner 50. The flange 56 extends radially inwardly from the radially inner surface 54A. The flange 56 is configured to contact the proximal end surface 39A of the bearing 38 in the housing 2. The flange 56 thus defines the axial location of the bearing 38 (or bearings where more than one bearing is provided) within the housing 2 and limits the bearing 38 from moving towards the drive end 30A of the drive shaft 30. In the shown example, a further flange 58 is also disposed at the proximal end of the bearing liner and extends radially outwardly from the radially outer surface 54B. The second flange 58 is configured to contact the proximal end of the liner housing 52. The second flange 58 thus secures the axial location of the liner housing 52 relative to the bearing liner 50 and so limits the liner housing 52 from moving towards the drive end 30A of the drive shaft 30. In some examples, a radially inwardly extending flange (not shown) may also be provided on the bearing liner 50 or the liner housing 52 adjacent the distal end surface 39B of the bearing 38 to limit movement of the bearing 38 (or bearings where more than one bearing is provided) away from the drive end of the drive shaft 30.

The liner housing 52 comprises a radially inner surface 60A and a radially outer surface 60B. The liner housing 52 further comprises a first aperture 62A. The first aperture 62A extends through the liner housing 52 from the radially outer surface 60B to the radially inner surface 60A to form an inlet. The first aperture 62A is configured to allow fluid to flow therethrough and into the cooling passage 34. The liner housing 52 further comprises a second aperture 62B. The second aperture 62B extends through the liner housing 52 from the outer surface 60B to the inner surface 60A to form an outlet. The second aperture 62B is configured to allow fluid to flow therethrough so as to exit the cooling passage 34. In the example shown, the first aperture 62A and the second aperture 62B are positioned on directly opposite sides of the liner housing 52. However, in other examples, the first and second apertures 62A, 62B can be disposed at any desired location on the annular liner housing 52. In other examples, a plurality of inlets and/or a plurality of outlets may be provided in the liner housing 52.

In the example shown, the radially inner surface 60A of the liner housing 52 mates with the radially outer surface 54B of the bearing liner 50 and the cooling passage 34 is defined between the radially outer surface 54B of the bearing liner 50 and the radially inner surface 60A of the liner housing 52. In the example shown, an annular recess or cut-out 63 is formed in the radially outer surface 54B of the bearing liner 50 to form the cooling passage 34. The cooling passage 34 may be configured to extend along the full axial extent or substantially the full axial extent of the one or more bearings 38 in the bearing assembly so as to increase the surface area of the bearing or bearings in axial alignment with the cooling passage 34, thus improving the cooling capacity of the cooling system.

A seal 64A, 64B is disposed at the first and second axial ends of the cooling passage 34 so as to avoid leakage of coolant fluid from the cooling passage 34 in use. The seal may take any suitable form and may, for example, be an O-ring seal.

With reference to Figure 1, the bearing liner 50 and the liner housing 52 can extend the axial length of the bearing 38. In other examples in which the bearing assembly 6 comprises more than one bearing 38, such as that shown in Figure 1, the bearing liner 50 and the liner housing 52 may extend axially over at least the axial extent of the bearings 38 of the bearing assembly 6.

The cooling passage 34 comprises one or more profiled surfaces. This may be achieved in any desired arrangement. In the example shown in Figure 3, the cut-out 63 in the radially outer surface 54B of the bearing liner 50 includes a profiled surface. The profiled surface may have a profiled geometry and / or topography. The profiled surface may be non-flat. The profiled surface has a plurality of axially spaced protrusions 66 in the example shown. The plurality of protrusions 66 may extend radially outward. The plurality of protrusions 66 may extend towards the radially inner surface 60A of the liner housing 52. The plurality of protrusions 66 may be provided along at least half of the axial extent of the bearing liner 50. Each of the plurality of protrusions 66 in the example shown has an end surface 68. A gap 70 may be formed between each end surface 68 and the inner surface 60A of the liner housing 52. The width of the gap 70 is substantially the same for each protrusion in some examples of the disclosure. Each protrusion in the plurality of protrusions 66 may be evenly spaced from an adjacent protrusion. The protrusions 66 may extend annularly. The protrusions 66 may extend annularly around the cooling passage 34. The protrusions 66 may extend perpendicular to the axis of rotation A. The protrusions 66 may extend continuously around the circumference of the bearing liner 50. The protrusions 66 may extend parallel to one another. The height of each protrusion may be substantially the same over the circumferential extent of the bearing liner 50. Channels 72 may be formed between the protrusions 66. The channels 72 may extend annularly. The channels 72 may extend annularly around the cooling passage 34. The channels 72 may extend perpendicular to the axis A. The channels 72 may extend parallel to one another. The channels 72 may extend around the circumference of the bearing liner 50. The channels 72 may be continuous around the circumferential extent of the bearing liner 50. The channels 72 may have a constant width W around the circumferential extent of the bearing liner 50.

In examples not shown in the Figures, the profiled surface may take any suitable form. In some examples, the width of the gap 70 may be different for each protrusion. In some examples, the height of the protrusions may vary over the circumferential extent of the bearing liner. In some examples, the plurality of protrusions 66 and the channels 72 may not extend perpendicular to the axis of rotation A, but at a different angle. The plurality of protrusions 66 may form a spiral or helical geometry. In some examples, each of the protrusions and corresponding channels may extend non-parallel to each other. The channels 72 may not be continuous around the circumferential extent of the bearing liner 50. The width of the channels may not be constant around the circumferential extent of the bearing liner.

In the example shown, the profiled surface of the radially outer surface 54B comprises a channel 74 formed at each of the first and second axial ends of the cooling passage 34. The channels 74 may be configured to receive the respective seals 64A, 64B (for example, O-ring seals). The channels 74 may thus be configured to allow the annular seal 64A, 64B to prohibit cooling fluid from exiting the cooling passage 34 at the first and second axial ends thereof.

Operation of a cooling system for a bearing assembly according to an example of the disclosure in an electrical machine will now be described.

When electrical power is supplied to the electrical machine 4, interacting electric and magnetic fields cause the rotor 12 to rotate about the axis A. The rotor is attached to the drive shaft 30, so that the rotation of the rotor 12 results in a corresponding rotation of the drive shaft 30. The ball bearings 44A-44C within the bearings 38A-38C allow the inner race of the bearing 38 to rotate with the drive shaft 30 while the outer race remains stationary and does not rotate with the drive shaft 30. Due to the interactions between various surfaces within the bearings 38A-38C, friction between the surfaces produces heat energy.

To cool the bearings, a cooling fluid (not shown) is flowed into the cooling passage 34 via a coolant delivery tube (not shown) or via an internal passage (not shown) internal to the electrical machine. The coolant delivery tube or internal passage is in use attached to the first aperture 62A. The coolant delivery tube or the internal passage may extend within the electrical machine along some or all of the axial extent thereof, for example within the outer casing 28 of the electrical machine. In some examples, the coolant delivery tube or the internal passage may extend from a fluid source internal to the electrical machine, for example a sump. In other examples, the coolant delivery tube or the internal passage may extend through the outer casing 28 of the electrical machine to an external fluid source. The cooling fluid therefore enters the cooling passage 34 through the first aperture 62A and flows around the cooling passage 34. The cooling fluid flows annularly around the bearing assembly 6. In the example shown, the flow of cooling fluid may split such that some of the cooling fluid flows in a first circumferential direction (clockwise) from the inlet to the outlet and some of the cooling fluid flows in a second circumferential direction (anti-clockwise) from the inlet to the outlet. The cooling fluid exits the cooling passage 34 through the second aperture 62B.

The cooling fluid flowing through the cooling passage 34 is in contact with the profiled radially outer surface 54B of the bearing liner 50 and is at a lower temperature than the bearing liner 50. Heat is transferred from the bearings 38 to the bearing liner 50 and transferred from the bearing liner 50 to the cooling fluid. By supplying a constant flow of cooling fluid which flows around the cooling passage 34 and along the full axial extent thereof before exiting the cooling passage 34, heat may be constantly transferred away from the bearing liner 50 and the bearings 38. The heat transfer from the bearings 38 to the cooling fluid cools the bearings 38. Cooling the bearings increases the efficiency of the bearings and reduces degradation thereof, thereby increasing the working life time of the bearings.

The cooling fluid used to cool the bearing can be water or water glycol. Water has a high specific heat capacity, and can therefore be useful as a cooling fluid. In other examples, the cooling fluid can be any other fluid that has suitable thermal properties, for example oil.

It may be advantageous, at least in some examples of the disclosure, for the radially outer surface of the bearing liner to comprise a profiled surface. The profiled surface has a high or increased surface area. The increased surface area results in a high contact area between the surface and the cooling fluid passing through the cooling passage. The high contact area enables a high heat flow rate and thus more effective cooling of the bearing assembly 6.

It will be understood that a housing for a bearing, for example in an electrical machine, or an electrical machine including a cooling system having any combination of the features described and shown in the accompanying drawings could be provided.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly the disclosure is not to be seen as limited by the foregoing description, but is only limited by the scope of the appended claims.

## Claims

1. A housing for a bearing, the housing comprising:
a radially inner annular surface extending around a central axis and adapted to receive a radially outer surface of a bearing;
a cooling passage extending through the housing and around the radially inner annular surface;
an inlet for fluid to flow into the cooling passage; and
an outlet for fluid to flow out of the cooling passage,
wherein the cooling passage comprises a profiled surface.

2. The housing of claim 1, wherein the profiled surface comprises one or more protrusions that extend into the cooling passage.

3. The housing of claim 2, wherein the one or more protrusions extend radially into the cooling passage.

4. The housing of claim 2 or 3, wherein the one or more protrusions form a plurality of axially spaced channels in the cooling passage.

5. The housing of claim 4, wherein the plurality of axially spaced channels extend parallel to one another.

6. The housing of claim 4 or 5, wherein the plurality of axially spaced channels extend perpendicular, or within 10° of perpendicular, to the central axis.

7. The housing of any of claims 2 to 5, wherein the one or more protrusions extend into the cooling passage from a radially inner surface of the cooling passage.

8. The housing of any preceding claim, wherein the cooling passage is configured to extend along an axial extent of one or more bearings received in the housing.

9. The housing of any preceding claim, wherein the housing comprises:
a bearing liner comprising the radially inner annular surface adapted to receive a radially outer surface of a bearing; and
a liner housing extending around and radially outward of the bearing liner,
wherein the cooling passage is formed between the bearing liner and the liner housing.

10. The housing of any preceding claim, further comprising:
a first seal provided at a first axial end of the cooling passage; and
a second seal provided at a second axial end of the cooling passage.

11. The housing of any preceding claim, wherein the inlet extends from a radially outer surface of the housing into the cooling passage, and / or
wherein the outlet extends from the cooling passage to the radially outer surface of the housing.

12. The housing of any preceding claim wherein the inlet is radially opposite the outlet.

13. A bearing assembly comprising:
a housing as claimed in any preceding claim; and
one or more bearings mounted for rotation within the housing, wherein, optionally, the one or more bearings are grease packed bearings.

14. An electrical machine comprising:
a drive shaft;
a rotor;
a stator; and
a bearing assembly as claimed in claim 13,
wherein, optionally, the electrical machine is a direct drive electrical motor,
wherein, optionally, the bearing assembly is mounted between the drive shaft and the rotor.

15. A method of cooling one or more bearings in a bearing assembly as claimed in claim 13 or an electrical machine as claimed in claim 14, the method comprising flowing a coolant through the cooling passage via the inlet and the outlet,
wherein, optionally, the coolant comprises a water-based coolant.
